Europäisches Patentamt

European Patent Office

Office européen des brevets

(11) Veröffentlichungsnummer : **0 468 193 B1**

(12) **EUROPÄISCHE PATENTSCHRIFT**

(45) Veröffentlichungstag der Patentschrift :
**12.04.95 Patentblatt 95/15**

(21) Anmeldenummer : **91109832.5**

(22) Anmeldetag : **15.06.91**

(51) Int. Cl.⁶ : **G01C 19/38**

(54) **Verfahren zur Bestimmung der Nordrichtung.**

(30) Priorität : **23.07.90 DE 4023349**

(43) Veröffentlichungstag der Anmeldung :
**29.01.92 Patentblatt 92/05**

(45) Bekanntmachung des Hinweises auf die
Patenterteilung :
**12.04.95 Patentblatt 95/15**

(84) Benannte Vertragsstaaten :
**BE CH DE FR GB LI NL SE**

(56) Entgegenhaltungen :
**EP-A- 0 056 447**
**WO-A-90/02311**
**DE-A- 3 240 804**

(73) Patentinhaber : **Bodenseewerk Gerätetechnik
GmbH**
**Alte Nussdorfer Strasse 15**
**Postfach 1120**
**D-88662 Überlingen (DE)**

(72) Erfinder : **Wick, Detlev Jost, Dr.-Ing.**
**Elbgaustrasse 178**
**W-2000 Hamburg 53 (DE)**
Erfinder : **Senn, Hans Jörg, Dipl.-Ing.**
**Wallstrasse 3**
**W-7860 Schopfheim (DE)**

(74) Vertreter : **Wolgast, Rudolf, Dipl.-Chem. Dr. et
al**
**Dipl.-Phys. Jürgen Weisse**
**Dipl.-Chem. Dr. Rudolf Wolgast**
**Bökenbusch 41**
**Postfach 11 03 86**
**D-42531 Velbert (DE)**

## Beschreibung

## Technisches Gebiet

Die Erfindung betrifft ein Verfahren zur Bestimmung der Nordrichtung mittels eines an einer Kreiselaufhängung pendelnd mit horizontaler Drallachse aufgehängten Kreisels,
- bei welchem das Kreiselrichtmoment, das die Drallachse des Kreisels nach Nord auszurichten trachtet, durch ein Kompensationsmoment kompensiert und das Kompensationsmoment gemessen wird, und
- bei welchem durch Messung in verschiedenen durch Schwenkwinkel der Kreiselaufhängung bestimmte Azimutpositionen aus der Meßgleichung

$$M_{gi} = K \sin (\alpha + \gamma_i) + M_o$$

mit

$M_{gi}$ = i-ter Meßwert des Kompensationsmomentes
$K$ = Proportionalitätskonstante,
$\gamma_i$ = i-ter Schwenkwinkel
$M_o$ = Nullmoment der Kreiselaufhängung
$\alpha$ = Nordbezugswinkel zwischen einer Gerätereferenz und Nord
der Nordbezugswinkel bestimmt wird.

## Zugrundeliegender Stand der Technik

Durch die DE-A-1 941 808 und die DE-A-1 941 809 ist ein bandaufgehängter Meridiankreisel bekannt, bei welchem die Auslenkung des Kreisels aus einer Bandnullage durch einen Abgriff abgegriffen und in ein elektrisches Signal umgesetzt wird. Dieses Signal ist über einen Verstärker auf einen um die Bandachse wirksamen Drehmomenterzeuger geschaltet. Der Drehmomenterzeuger wirkt auf den Kreisel und kompensiert das um die Bandachse auf den Kreisel wirkende "Kreiselrichtmoment", das die Drallachse des Kreisels nach Nord auszurichten trachtet. Der Erregerstrom des Drehmomenterzeugers ist proportional dem Kreiselrichtmoment. Es ist eine von diesem Erregerstrom beaufschlagte Anzeigevorrichtung zur Anzeige der Nordrichtung vorgesehen. Bei den genannten Druckschriften besteht diese Anzeigevorrichtung in einem Stellmotor, durch welchen die Bandaufhängung solange verdreht wird, bis der Erregerstrom null wird. Dann liegt die Kreiseldrallachse in der Nordrichtung, so daß kein Kreiselrichtmoment mehr wirkt. Mit der Bandaufhängung ist ein Fernrohr verbunden, das dann nach Nord ausgerichtet ist.

Die DE-A-2 229 431 zeigt einen bandaufgehängten Meridiankreisel, bei welchem ebenfalls die Auslenkung des Kreisels aus einer Bandnullage unter dem Einfluß des Kreiselrichtmomentes mittels eines Abgriffs erfaßt und in ein elektrisches Signal umgesetzt wird. Dieses Signal steuert über einen Verstärker einen Stellmotor, der ein Fernrohr verdreht. Mit dem Stellmotor ist ein Stellungsgeber verbunden. Das Signal des Stellungsgebers ist als Rückführsignal über einen Verstärker auf den Drehmomenterzeuger geschaltet.

Schließlich zeigt die DE-B-21 24 357 ein MeridianKreiselgerät mit einem in einem Zwischengehäuse an einem Band aufgehängten Kreisel. Ein Abgriff erzeugt ein Abgriffsignal nach Maßgabe der Auslenkung des Kreisels aus der Bandnullage. Ein Drehmomenterzeuger übt ein dem Kreiselrichtmoment entgegenwirkendes Gegenmoment auf den Kreisel aus, wobei das Abgriffsignal wieder mit hohem Verstärkungsgrad auf den Drehmomenterzeuger geschaltet ist. Das Zwischengehäuse ist durch einen Stellmotor verdrehbar. Das Abgriffsignal ist auf einen Speicher geschaltet. Durch eine Steuerschaltung ist das Abgriffsignal nach dem Einstellen des Kreisels über eine Umschaltvorrichtung von dem Abgriff ab- und auf den Stellmotor aufschaltbar. Ein Rückführkreis macht den Drehwinkel des Stellmotors proportional zu dem gespeicherten Abgriffsignal.

Die vorstehend erwähnten Meridiankreisel gestatten die relativ schnelle Bestimmung der Nordrichtung. Die Meridiankreisel sind dabei möglichst störungsfrei auf einem Stativ angeordnet, das seinerseits fest auf der Erde steht und vor Erschütterungen möglichst geschützt ist. Es ist nicht möglich, solche Meridiankreisel ohne besondere weitere Vorkehrungen in einer gestörten Umgebung, beispielsweise in einem Fahrzeug anzuordnen.

Es sind daher Filteranordnungen vorgesehen worden, durch welche eine Filterung des die "Nordabweichung" repräsentierenden Signals, nämlich des Erregerstromes des Drehmomenterzeugers, erfolgt.

Die DE-A-25 45 026 zeigt einen bandaufgehängten Kreisel mit Abgriff und Drehmomenterzeuger, bei welchem ein dem Erregerstrom des Drehmomenterzeugers proportionales Signal durch einen Analog-Digital-Wandler digitalisiert wird. Das mit einem festen Takt erhaltene Digitalsignal wird einem Rechner zur rekursiven Mittelwertbildung zugeführt. Der jeweils zuletzt rekursiv erhaltene Mittelwert wird sofort ausgegeben. Durch die Mittelwertbildung erfolgt eine Filterung. Durch die rekursive Bildung dieses Mittelwertes wird erreicht, daß schon schnell ein, wenn auch u.U. noch ungenauer, Wert für die Nordabweichung zur Verfügung steht, der sich mit fortschreitender Zeit laufend verbessert, wobei aber die erforderliche Speicherkapazität sich in Grenzen hält.

Eine ähnliche Anordnung zeigt die DE-A-26 18 868. Dort wird jeweils der Mittelwert aus einer festen Anzahl von Digitalsignalen, nämlich den letzten N Digitalsignalen gebildet, wobei N eine feste, ganze Zahl ist. Auch dieser Mittelwert wird rekursiv gebildet.

Die DE-C-30 45 823 beschreibt ein Verfahren zur Ermittlung der Nordrichtung mittels eines nordsuchenden Kreisels. Ein äußerer Rahmen ist von einem Pendelkörper gebildet, der mittels eines Kardangelenkes in einem Gehäuse aufgehängt und drehbar ist. Ein innerer Rahmen ist in dem Pendelkörper um eine vertikale Achse drehbar angeordnet.

In dem inneren Rahmen sitzt ein Kreisel mit horizontaler Drallachse. Der innere Rahmen ist mittels eines Fesselkreises an den äußeren Rahmen gefesselt. Der Fesselkreis enthält einen Abgriff, der auf Auslenkungen des inneren Rahmens gegenüber dem äußeren Rahmen anspricht, und einen Drehmomenterzeuger, der von dem verstärkten Abgriffsignal beaufschlagt ist und auf den inneren Rahmen ein der Auslenkung entgegenwirkendes Drehmoment ausübt. Zur Ermittlung der Nordrichtung wird dieses Drehmoment bei drei verschiedenen Winkelstellungen des Pendelkörpers gemessen. Aus den drei Messungen können der Nordbezugswinkel sowie Skalenfaktor und Drift bestimmt werden.

Beim Auftreten von Störungen, z.B. von Vibrationen eines Fahrzeugs, in dem die Kreiselanordnung sitzt, erfordert es einige Zeit, bis der erhaltene Meßwert mit hinreichender Genauigkeit vorliegt. Für drei Messungen ist dann eine relativ lange Zeit erforderlich. Andererseits ist bei manchen, insbesondere militärischen, Anwendungen die für die Nordung zur Verfügung stehende Zeit begrenzt.

Die EP-A-0 365 920 beschreibt eine Filteranordnung zur Erzeugung eines Schätzwertes einer durch Störungen beeinflußten Meßgröße mittels eines eine Gewichtung von Meßsignalen vornehmenden Filters. Dieses Filter enthält Mittel zur Gewinnung eines Maßes für die Störung und Mittel zur Veränderung der Gewichtung der Meßsignale in Abhängigkeit von dem Maß der Störung. Auf diese Weise werden Werte der Meßgröße, die während des Auftretens der Störung erscheinen, bei der Filterung nicht oder mit geringem Gewicht berücksichtigt. Bei einem bandaufgehängten, gefesselten Meridiankreisel dient als Maß für die Störung eine Eigenschwingung des Systems.

Die DE-A-32 40 804 beschreibt ein Verfahren zur Ermittlung der Nordrichtung mittels eines nordsuchenden Kreisels, bei welchem das Kreiselrichtmoment durch ein Gegenmoment von einem Drehmomenterzeuger kompensiert wird. Das Kompensationssignal wird nach Mittelwert-, Ableitungs- und Betragsbildung einem Tiefpaß zugeführt. Das Ausgangssignal des Tiefpasses hat einen stetig fallenden Verlauf, der durch Erschütterungen unterbrochen wird. Diese Veränderung erfaßt ein Prüfblock, dessen Ausgangssignal einen Schalter betätigt. Bei störungsfreiem Betrieb werden die Kompensationssignale über den Schalter zu einer Anzeige verarbeitet. Bei Auftreten einer Störung wird der Schalter geöffnet.

Die DE-A-38 28 410 beschreibt ein Filterverfahren für die nacheinander erhaltenen, von Störsignalen überlagerten Nordungsergebnisse eines nordbestimmenden Kreisels. In einem Zeitfenster wird geprüft, ob die Meßwerte mehr als eine vorgegebene Maximalabweichung auseinanderliegen. Nur wenn dies nicht der Fall ist, wird der Mittelwert der in diesem Zeitfenster liegenden Messungen als korrigiertes Nordungsergebnis ausgegeben.

**Offenbarung der Erfindung**

Der Erfindung liegt die Aufgabe zugrunde, bei einem Verfahren der eingangs genannten Art zur Bestimmung der Nordrichtung die Meßzeit zu verkürzen.

Erfindungsgemäß wird diese Aufgabe dadurch gelöst, daß, ausgehend von Schätzwerten für Proportionalitätskonstante K und Nullmoment $M_0$,

(a) bei einer für einen bestimmten Schwenkwinkel auszuführenden Messung der Mittelwert aus eine Reihe von Kompensationsmomentmeßwerte ermittelt wird,

(b) daraus und aus der vorgennanten Meßgleichung ein Schätzwert für den Nordbezugswinkel errechnet wird,

(c) aus dem Zusammenhang zwischen einem Fehler der Messung des Kompensationsmoments bei dem so bestimmten Schätzwert und dem Fehler des sich daraus ergebenen Nordbezugswinkel ein Fehler für die nächste bei einem anderen Schwenkwinkel auszuführenden Messung ermittelt wird, und

(d) bei dieser nächsten Messung eine Reihe von Kompensationsmomentmessungen solange durchgeführt wird, bis die Differenz aufeinanderfolgender, aus der Meßreihe gebildeter Mittelwerte der Kompensationsmomentmeßwerte diesen Fehler unterschreitet.

Auf dieser Weise wird jede Einzelmessung nur mit einer Genauigkeit durchgeführt, die dem Gewicht dieser Einzelmessung im Gesamtfehlerbuget der Nordung für den jeweiligen Nordbezugswinkel entspricht. Eine Verringerung der Genauigkeitsanforderung für eine Messung führt zu einer Verkürzung der Meßzeit, weil beispielsweise ein Mittelwert über ein kürzeres Zeitintervall gebildet werden kann.

Dabei kann so vorgegangen werden, daß
- drei Positionen für eine Dreipositionsmessung vorgegeben werden,
- in einer ersten Position eine Grobmessung des Nordbezugswinkels erfolgt,
- aufgrund dieser Grobmessung eine zweite Position so gewählt wird, daß sich aus den beiden Messungen ein Nordbezugswinkel mit optimaler Genauigkeit ergibt.

Es kann dann
- anhand einer Fehleranalyse nach der zweiten Messung geprüft werden, ob die mit den Messungen in der ersten und der zweiten Position erzielte Genauigkeit des Nordbezugswinkels ausreicht, und
- die Messung abgebrochen werden, wenn dies der Fall ist.

Es ist aber auch möglich, daß
- eine maximale Meßzeit vorgegeben wird,
- nach der zweiten Messung geprüft wird, ob die dafür zur Verfügung stehende maximale Meßzeit erreicht ist, und
- die Messung abgebrochen wird, wenn dies der Fall ist.

Ein Ausführungsbeispiel der Erfindung ist nachstehend unter Bezugnahme auf die zugehörige Zeichnung näher erläutert.

**Kurze Beschreibung der Zeichnungen**

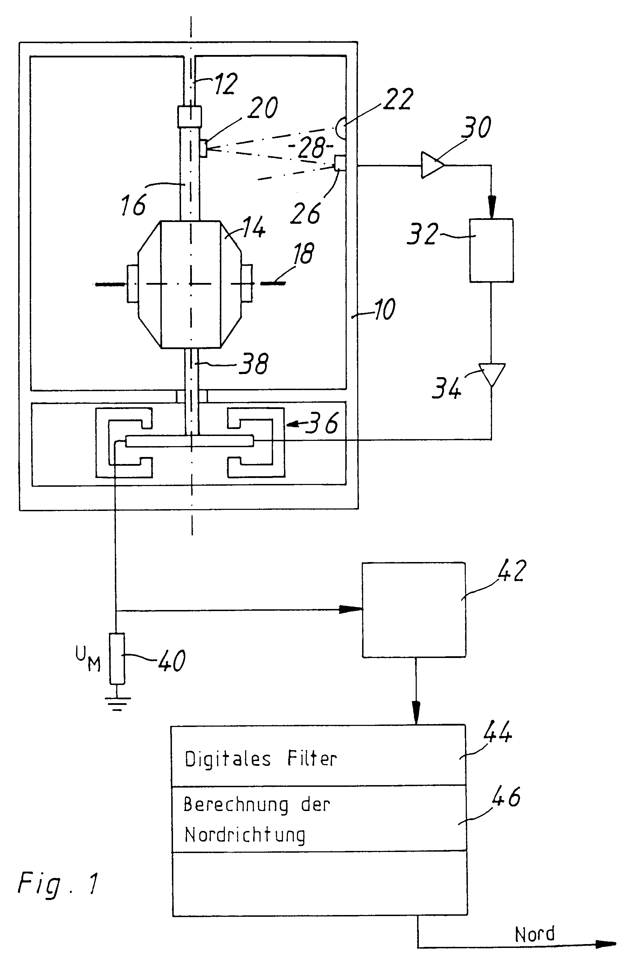

Fig.1    ist eine perspektivische Darstellung eines bei der Erfindung benutzten bandaufgehängten Meridiankreisels.

Fig.2    ist ein Flußdiagramm der Steuerung und Signalverarbeitung für die bestimmung der Nordrichtung.

Fig.3    ist ein Flußdiagram der Steuerung und Signalverarbeitung bei einer abgewandelten Form des Verfahrens nach der Erfindung.

**Bevorzugte Ausführung der Erfindung**

In einem Gehäuse 10 ist an einem Band 12 das Gehäuse 14 eines Kreisels mittels eines vertikalen Mastes 16 aufgehängt. Die Drallachse 18 des Kreisels liegt horizontal. Infolge der Erddrehung wirkt auf den Kreisel ein Kreiselrichtmoment, welches die Drallachse 18 nach Nord auszurichten trachtet.

An dem Mast 16 ist ein Spiegel 20 angeordnet. Eine Lichtquelle 22 schickt ein Lichtbündel 24 über den Spiegel 20 auf eine Photodetektoranordnung 26. Lichtquelle 22, Spiegel 20 und Photodetektoranordnung 26 bilden einen photoelektrischen Abgriff 28, der ein Abgriffsignal nach Maßgabe der Auslenkung des Kreisels aus der Bandnullage liefert. Die Bandnullage ist durch Verdrehung des Gehäuses 10 nacheinander in Winkelstellungen $\gamma_i$ gegenüber einer Referenzposition verdrehbar.

Das Abgriffsignal wird über einen Vorverstärker 30, ein Vorhaltnetzwerk 32, und einen Endverstärker 34 auf einen Drehmomenterzeuger 36 gegeben. Der Anker des Drehmomenterzeugers 36 ist über eine Stange 38, die gleichachsig zu dem Mast 16 an der Unterseite des Kreiselgehäuses 14 angebracht ist, mit dem letzteren verbunden. Der Drehmomenterzeuger 36 übt auf das Gehäuse 14 ein dem Kreiselrichtmoment entgegengerichtetes Drehmoment aus, welches praktisch das Kreiselrichtmoment kompensiert. Dadurch ist der Kreisel elektrisch an die Bandnullage gefesselt. Das Drehmoment und infolge der Charakteristik des Drehmomenterzeugers 36 auch das zugehörige verstärkte Abgriffsignal hängen mit dem Winkel zwischen Drallachse 18 und Nord und damit praktisch dem Winkel zwischen Bandnullage und Nord zusammen nach der Meßgleichung

$$M_{gi} = K \sin (\alpha + \gamma_i) + M_o$$

mit

$M_{gi}$  = i-ter Meßwert des Kompensationsmomentes

K    = Proportionalitätskonstante,

$\gamma_i$   = i-ter Schwenkwinkel

$M_o$   = Nullmoment der Kreiselaufhängung

$\alpha$    = Nordbezugswinkel zwischen einer Gerätereferenz und Nord.

Das verstärkte Abgriffsignal wird durch den Spannungsabfall $U_M$ an einem Meßwiderstand 40 gemessen, der mit dem Drehmomenterzeuger 36 in Reihe liegt. Dieser Spannungsabfall $U_M$ ist dem Abgriffsignal proportional.

Mittels eines Analog-Digital-Wandlers 42 wird der Spannungsabfall $U_M$ in Zeitabständen T abgetastet und in ein digitales Signal in Form eines 12 Bit-Wortes umgesetzt. Dieses digitale Signal wird auf ein digitales Filter 44 gegeben, welches einen Mittelwert liefert.

Der Mittelwert wird in dem Filter 44 aus den jeweils N letzten abgetasteten Messwerten $U_M$ nach der Rekursionsformel

$$(2) \qquad \overline{U}_M(nT) = \overline{U}_M((n-1)T) + \frac{1}{N} \left[ U_M(nT) - U_M((n-N) \cdot T) \right]$$

gebildet. Das ist in der DE-A-26 18 868 und der US-A-4 075 764 beschrieben. Dadurch, dass jeweils nur die letzten N Messwerte berücksichtigt werden, werden bei Einschwingvorgängen die vom Endzustand stark abweichenden Anfangswerte mit zunehmendem "n" in zunehmendem Masse ausser Betracht gelassen. Der Fehler des so gebildeten Mittelwertes $\overline{U}_M(nT)$ wird daher umso kleiner, je grösser "n" ist. Eine möglichst genaue Bestimmung des Messwertes des Kompensationsmomentes erfordert daher längere Zeit. Die Mittelwertbildung erfolgt, bis die Differenz aufeinanderfolgender Mittelwerte kleiner als ein bestimmter vorgegebener Fehler $\varepsilon_o$ wird. Bei dem erfindungsgemässen Verfahren wird das Kompensationsmoment bei drei verschiedenen, um eine vertikale Achse gemessenen Winkelstellungen der Gerätereferenz bestimmt. Diese Winkelstellungen sind durch die Winkel $\gamma_i$, also $\gamma_1$, $\gamma_2$ und $\gamma_3$ vorgegeben. Es werden dann aus den erhaltenen Messwerten $M_{g1}$, $M_{g2}$, und $M_{g3}$ drei Gleichungen für die drei Unbekannten K, Mo, und $\alpha$ erhalten:

$$(3) \qquad M_{g1} = K \sin(\alpha + \gamma_1) + Mo$$
$$(4) \qquad M_{g2} = K \sin(\alpha + \gamma_2) + Mo$$
$$(5) \qquad M_{g2} = K \sin(\alpha + \gamma_3) + Mo$$

Daraus können die drei Unbekannten bestimmt werden. Insbesondere kann der Nordbezugswinkel $\alpha$ bestimmt werden.

Es ist nun

$$(6) \qquad dM_{gi} = K \cos(\alpha + \gamma_i)d\alpha$$

oder

$$(7) \qquad d\alpha = \frac{dM_{gi}}{K \cos(\alpha + \gamma_i)}.$$

Ein Fehler von $M_{gi}$ wirkt sich somit unterschiedlich auf die Messung des Nordbezugswinkels $\alpha$ aus, je nachdem, wie gross der Nordbezugswinkel $\alpha$ ist. Wenn $\alpha + \gamma_i = 90°$ ist, dann ist $\cos(\alpha + \gamma_i) = 0$ und $\sin(\alpha + \gamma_i) = 1$. Der Sinus ist also im Maximum. Eine kleine Änderung des Nordbezugswinkels bringt praktisch keine Änderung des Kreiselrichtmomentes bzw. des gemessenen Kompensationsmomentes $M_{gi}$. Andersherum: Ein Fehler des gemessenen Kompensationsmomentes $M_{gi}$ bringt einen grossen Fehler bei der Bestimmung des Nordbezugswinkels $\alpha$. Wenn andererseits $\cos(\alpha + \gamma_i) = 1$, also $\sin(\alpha + \gamma_i) = 0$ ist, dann wird

$$(8) \qquad dM_{gi} = K \cdot d\alpha$$
$$(9) \qquad d\alpha = \frac{dM_{gi}}{K}$$

Ein Fehler in der Bestimmung von $M_{gi}$ wirkt sich mit minimaler Empfindlichkeit (1/K) als Fehler bei der Messung des Nordbezugswinkels $\alpha$ aus.

Wenn sich aber ein Fehler in der Messung des Kompensationsmomentes $M_{gi}$ bei einer bestimmten Stellung $\gamma_i$ des bandaufgehängten Meridiankreisels sowieso nur mit geringem Gewicht, vergleichen mit den Messungen bei anderen Stellungen, auf die Messung des gesuchten Nordbezugswinkels auswirkt, dann hat es wenig Sinn, das Kompensationsmoment in dieser Stellung des Meridiankreisels mit der gleichen Genauigkeit zu messen wie in den anderen Stellungen. Höhere Genauigkeit bedingt bei der Signalverarbeitung nach US-A-4 075 764 eine grösseres "n" und damit eine längere Messzeit, wie oben erläutert wurde. Es ist daher möglich in den Fällen, in denen aus den vorangegangenen Messungen erkennbar ist, dass die laufende Messung von $M_{gi}$ nur mit geringem Gewicht in die Messung eingeht, die Messung nach geringerem "n" abzubrechen und sie damit mit einem möglicherweise grösseren Fehler aber dafür schneller durchzuführen.

Das Verfahren enthält somit im wesentlichen die folgenden Verfahrenschritte:

(a) Der bandaufgehängte Meridiankreisel wird mit dem Gehäuse 10 in eine erste Stellung gebracht, in welcher eine Gehäusereferenz, z.B. die Bandnullage, mit einer ortsfesten Referenzrichtung einen vorgegebenen Winkel bildet.

(b) In dieser Stellung wird das Kompensationsmoment $M_{g1}$ unter Mittelwertbildung gemäss Gleichung (2) gemessen.

(c) Aus dem gemessenen Kompensationsmoment $M_{g1}$ wird unter Zugrundelegung der näherungsweise bekannten Proportionalitätskonstante K und des ebenfalls näherungsweise bekannten Nullmoments $M_o$ ein

Schätzwert $\hat{\alpha}$ für den Nordreferenzwinkel $\alpha$ ermittelt.

(d) Aus dem Schätzwert $\hat{\alpha}$ für den Nordreferenzwinkel $\alpha$ wird nach Gleichung (7) ein Gewicht ermittelt, mit welchem bei der nachfolgenden zweiten Messung in der Winkelstellung $\gamma_2$ ein Fehler ein Fehler $dM_{g2}$ des Kompensationsmoments sich als Fehler auf den zu messenden Nordreferenzwinkel auswirken würde.

(e) Es wird eine Genauigkeit für diese Messung vorgegeben, also einen zulässigen Fehler von $M_{g2}$, der umso kleiner ist, je höher das aus dem Schätzwert $\hat{\alpha}$ des Nordreferenzwinkels ermittelte Gewicht der zweiten Messung ist.

(f) Das Gehäuse 10 des bandaufgehängten Meridiankreisels wird in eine Stellung gebracht, in welcher die Gehäusereferenz einen Winkel $\gamma_2$ mit der ortsfesten Referenzrichtung bildet.

(g) In dieser Stellung wird das Kompensationsmoment $M_{g2}$ in der oben beschriebenen Weise gemessen, wobei die Mittelwertbildung abgebrochen und der Messwert ausgegeben wird, wenn die Differenz aufeinanderfolgender Mittelwerte der vorgegebenen zulässigen Fehler unterschreitet.

(h) Es wird aus dem bei der ersten Messung erhaltenen Schätzwert $\hat{\alpha}$ für den Nordreferenzwinkel (oder einem Schätzwert, der bei der zweiten Messung erhalten wird) nach Gleichung (7) ein Gewicht ermittelt, mit welchem bei der nachfolgenden dritten Messung in der Winkelstellung $\gamma_3$ ein Fehler $dM_{g3}$ des Kompensationsmoments sich auf den zu messenden Nordreferenzwinkel $\alpha$ auswirken würde.

(i) Es wird eine Genauigkeit für diese dritte Messung vorgegeben, also ein zulässiger Fehler von $M_{g3}$, der umso kleiner ist, je höher das aus dem Schätzwert des des Nordreferenzwinkels ermittelte Gewicht der dritten Messung ist.

(j) Das Gehäuse 10 des bandaufgehängten Meridiankreisels wird in eine Stellung gebracht, in welcher die Gehäusereferenz einen Winkel $\gamma_3$ mit der ortsfesten Referenzrichtung bildet.

(k) In dieser Stellung wird das Kompensationsmoment $M_{g3}$ in der oben beschriebenen Weise gemessen, wobei die Mittelwertbildung abgebrochen und der Messwert ausgegeben wird, wenn die Differenz aufeinanderfolgender Mittelwerte den für die dritte Messung vorgegebenen zulässigen Fehler unterschreitet.

(l) Aus den erhaltenen drei Messwerten $M_{g1}$, und $M_{g2}$ und $M_{g3}$ wird nach den Gleichungen (3), (4) und (5) der Nordreferenzwinkel $\alpha$ bestimmt.

Die Signalverarbeitung erfolgt mittels eines digitalen Rechners, der in der Figur durch die Blöcke "Digitales Filter" 44 und "Berechnung der Nordrichtung" 46 dargestellt ist. Der Rechner berechnet aus dem Messwert $M_{g1}$ der ersten Messung den Schätzwert $\hat{\alpha}$ des Nordreferenzwinkels und die zulässigen Fehler für die zweite und dritte Messung. Der Rechner überwacht die gebildeten Mittelwerte und bewirkt den Abbruch der Mittelwertbildung und die Ausgabe der Messwerte, wenn die Differenz aufeinanderfolgender Mittelwerte den berechneten, zulässigen Fehler unterschreitet. Der Rechner steuert auch über einen (nicht dargestellten) Stellmotor die Eindrehung des Gehäuses 10 in die verschiedenen Winkelstellungen.

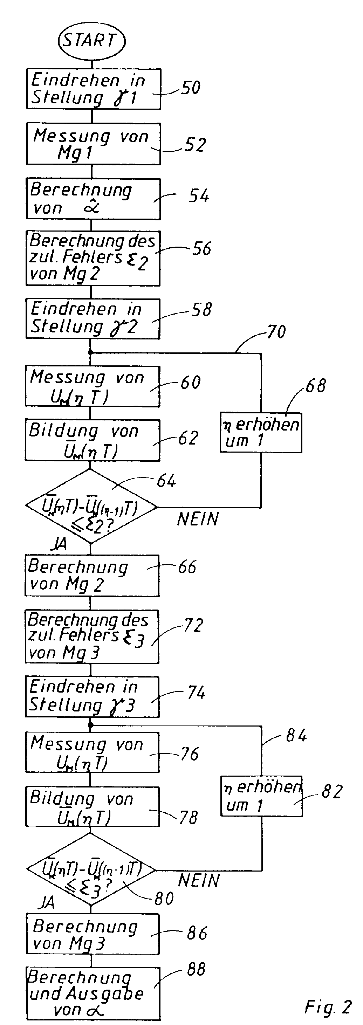

Die Signalverarbeitung und Steuerung ist in Fig. 2 als Flussdiagramm dargestellt.

Block 50 symbolisiert die Eindrehung des Meridiankreisels in die erste Stellung, die durch den Winkel $\gamma_1$ bestimmt ist. Gemäss Block 52 wird in dieser Stellung das Kompensationsmoment $M_{g1}$ gemessen. Aus dem Kompensationsmoment $M_{g1}$ wird, wie durch Block 54 dargestellt ist, der Schätzwert $\hat{\alpha}$ des Nordreferenzwinkels bestimmt. Aus dem Schätzwert $\hat{\alpha}$ wird über das Gewicht eines Fehlers von $M_{g1}$ der zulässige Fehler $\varepsilon_2$ des gemessenen Kompensationsmoments $M_{g2}$ bestimmt. Das ist durch Block 56 dargestellt. Ein Block 58 symbolisiert die anschliessende Eindrehung des Meridiankreisels in die zweite Stellung, die durch den Winkel $\gamma_2$ bestimmt ist. Anschließend erfolgt die Bestimmung von $M_{g2}$. Dabei werden im Taktintervall T die Werte $U_M$ der am Widerstand 40 abfallenden Spannung $U_M$ abgetastet und digitalisiert. Der im n-ten Taktintervall abgetastete Wert ist $U_M(nT)$. Die Erfassung von $U_M(nT)$ ist durch Block 60 dargestellt. Aus $U_M(nT)$ und den vorangegangenen Werten von $U_M$ wird gemäss Gleichung (2) der Mittelwert $\overline{U}_M(nT)$ gebildet. Das ist durch Block 62 dargestellt. Gemäss Raute 64 wird geprüft, ob die Differenz $\overline{U}_M(nT) - \overline{U}_M(n-1)T$ aufeinanderfolgender Mittelwerte kleiner oder gleich dem berechneten zulässigen Fehler $\varepsilon_2$ ist. Es ist $\varepsilon_2 \leqq \varepsilon_0$ Ist das Ergebnis der Prüfung positiv ("JA"), wird aus dem Mittelwert $\overline{U}_M(nT)$ gemäss Block 66 das Kompensationsmoment $M_{g2}$ berechnet. Das Flussdiagramm läuft gradlinig nach unten weiter. Ist das Ergebnis der Prüfung negativ (NEIN"), wird "n" um eins erhöht, d.h. es wird ein weiterer abgetasteter Wert von $U_M$ zur Mittelwertbildung herangezogen und das beschriebene Verfahren wiederholt. Das ist durch Block 68 in der zum "Eingang" von Block 60 geführten Schleife 70 dargestellt.

Nach Berechnung des Kompensationsmoments $M_{g2}$ aus dem Mittelwert $\overline{U}_M(nT)$ wird gemäss Block 72 der zulässige Fehler $\varepsilon_3$ für die dritte Messung berechnet. Block 74 symbolisiert das Eindrehen des Meridiankreisels in die dritte, durch den Winkel $\gamma_3$ definierte Stellung.

In der dritten Stellung erfolgt wieder die Mittelwertbildung der abgetasteten und digitalisierten Werte $U_M$ der am Widerstand 40 abfallenden Spannung $U_M$. Dabei entspricht Block 76 dem Block 60 bei der zweiten Messung. Block 78 entspricht Block 62. Raute 80 entspricht Raute 64, Block 82 entspricht Block 68 und Schleife 84 entspricht Schleife 70.

Gemäss Block 86 wird das Kompensationsmoment $M_{g3}$ aus dem Mittelwert berechnet. Block 88 symbolisiert die Berechnung des Nordreferenzwinkels $\alpha$ nach den Gleichungen (3), (4) und (5).

In vielen Fällen ist die Proportionalitätskonstante hinreichend genau bekannt. In diesem Fall kann dier Nordbezugswinkel aus zwei Messungen gemäss den Gleichungen (3) und (4) bestimmt werden. Voraussetzung ist, dass die Unsicherheit in der Kenntnis der Proportionalitätskonstanten K zu tolerierbaren Nordungsfehlern führt. Weiterhin ist Voraussetzung, dass der Schwenkwinkel zwischen den beiden Positionen, in denen die beiden Messungen erfolgen, in einem eine Nordung mit ausreichender Genauigkeit zulassenden Bereich liegt. Es wird dann folgendermassen vorgegangen:

(a) Es sind zunächst drei Positionen für eine Dreierpositionsmessung vorgegeben, wie bei dem vorstehend beschriebenen Verfahren.

(b) Der bandaufgehängte Meridiankreisel wird mit dem Gehäuse 10 in eine erste dieser Positionen gebracht, in welcher eine Gehäusereferenz, z.B. die Bandnullage, mit einer ortsfesten Referenzrichtung einen vorgegebenen Winkel $\gamma_1$ bildet.

(c) In dieser Stellung wird das Kompensationsmoment $M_{g1}$ unter Mittelwertbildung gemäss Gleichung (2) gemessen.

(d) Aus dem gemessenen Kompensationsmoment $M_{g1}$ wird unter Zugrundelegung des als bekannt ausgenommenen Proportionalitäts-Konstante K und des ebenfalls näherungsweise bekannten Nullmoments $M_o$ in einer Grobmessung ein Schätzwert $\hat{\alpha}$ für den Nordreferenzwinkel $\alpha$ ermittelt.

(e) Aufgrund dieser Grobmessung wird aus den vorgegebenen drei Positionen eine zweite Position für eine zweite Messung so gewählt, dass sich aus der ersten und der zweiten Messung ein Nordbezugswinkel $\alpha$ mit optimaler Genauigkeit ergibt.

(f) Nach der zweiten Messung wird eine Fehleranalyse durchgeführt, in welcher geprüft wird, ob die mit der ersten und der zweiten Messung erzielte Genauigkeit des Nordbezugswinkels ausreicht.

(g) Die Messung wird abgebrochen, wenn dies der Fall ist.

(h) Aus den beiden Messungen wird $\alpha$ bestimmt.

(i) Der Nordbezugswinkel $\alpha$ wird ausgegeben.

Ergibt die Fehleranalyse, dass die mit der ersten und der zweiten Messung erzielte Genauigkeit nicht ausreicht, wird eine dritte Messung durchgeführt.

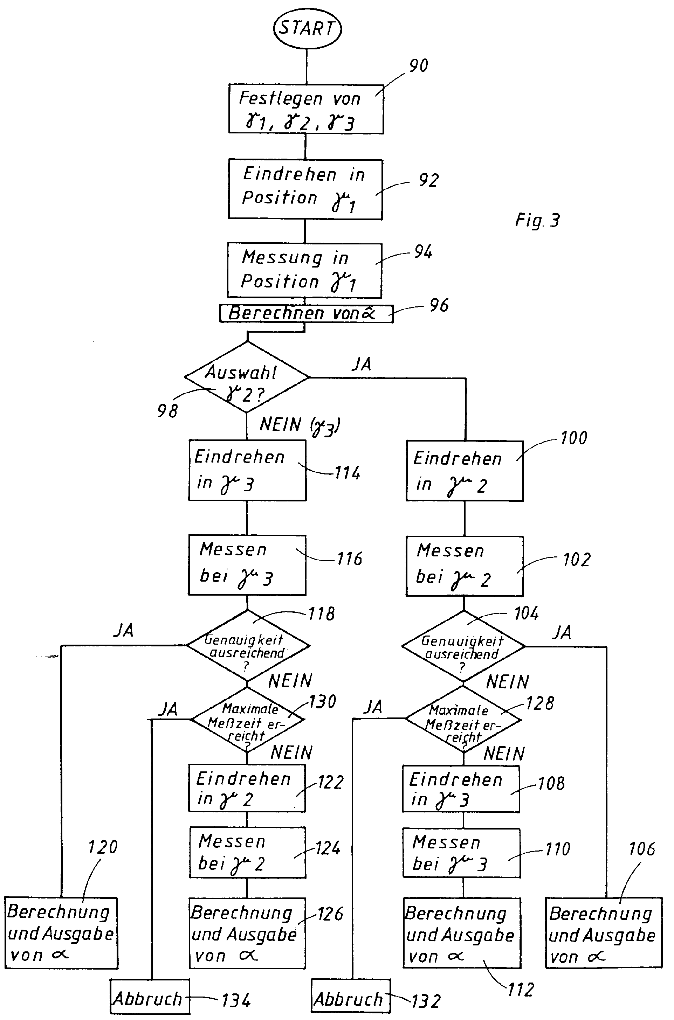

Dieser Ablauf ist in Fig. 3 als Flussdiagramm dargestellt:

Gemäss Block 90 werden drei Stellungen festgelegt, die durch die Winkel $\gamma_1$, $\gamma_2$ und $\gamma_3$ definiert sind. Der Meridiankreisel wird in die erste Stellung eingedreht. Das ist durch Block 92 dargestellt. In der ersten Stellung erfolgt eine Messung des Kompensationsmoments $M_{g1}$. Das ist durch Block 94 dargestellt. Gemäss Block 96 wird aus dem gemessenen Kompensationsmoment ein Schätzwert $\hat{\alpha}$ des Nordreferenzwinkels bestimmt.

Raute 98 symbolisiert die Auswahl von $\gamma_2$ als zweite Messposition. "NEIN" bedeutet dabei notwendigerweise die Auswahl von $\gamma_3$ als zweiter Messposition.

Bei Auswahl von $\gamma_2$ folgt das Flussdiagramm dem rechten Zweig. Der Meridiankreisel wird in die Stellung $\gamma_2$ eingedreht, was durch Block 100 dargestellt ist. Es wird in der Stellung $\gamma_2$ gemessen. Das ist durch Block 102 dargestellt. Die Fehlerauswertung ist dargestellt durch die Raute 104 "Genauigkeit ausreichend". Bei positivem Ergebnis der Fehlerauswertung ("JA") erfolgt die Berechnung und Ausgabe des Nordreferenzwinkels $\alpha$, was durch Block 106 dargestellt ist. Bei negativem Ergebnis wird der Meridiankreisel noch in die Stellung $\gamma_3$ gedreht. Das ist durch Block 108 dargestellt. Block 110 stellt die Messung in dieser Stellung dar. Block 112 symbolisiert die Berechnung und Ausgabe des Nordreferenzwinkels $\alpha$.

Bei Nichtauswahl von $\gamma_2$ (und damit Auswahl von $\gamma_3$) folgt das Flussdiagramm dem linken Zweig in Fig. 3. Der linke Zweig ist übereinstimmend mit dem rechten Zweig ausgebildet, wobei lediglich die Funktionen von $\gamma_2$ und $\gamma_3$ vertauscht sind. Die Blöcke 114 und 116 entsprechen den Blöcken 100 bzw. 102 jedoch angewandt auf $\gamma_3$. Raute 118 entspricht der Raute 104. Block 120 entspricht dem Block 106. Die Blöcke 122 und 124 entsprechen den Blöcken 108 bzw. 110 jedoch angewandt auf $\gamma_2$. Block 126 entspricht Block 112.

Bei den Messungen in den Stellungen $\gamma_2$ und $\gamma_3$ erfolgt ebenfalls eine Anpassung der geforderten Genauigkeit and das Gewicht eines Fehlers des jeweiligen Messwertes bei der Berechnung des Nordreferenzwinkels $\alpha$, wie das oben in Verbindung mit Fig. 2 beschrieben ist.

Es gibt Fälle, in denen eine maximale Messzeit vorgegeben ist. Wenn diese Messzeit nicht eingehalten werden kann, beispielsweise weil der Meridiankreisel zu starken Vibrationen ausgesetzt ist, muss die Messung abgebrochen werden. Solche Fälle treten insbesondere bei militärischen Anwendungen auf. In diesem Fall wird nach der zweiten Messung geprüft, ob die zur Verfügung stehende maximale Messzeit erreicht ist. Wenn das der Fall ist, wird die Messung abgebrochen.

Das ist in Fig. 3 durch die Rauten 128 und 130 im rechten bzw. linken Zweig des Flussdiagramms angedeutet. Gemäss Raute 128 wird geprüft, ob nach der Messung in der Stellung $\gamma_2$ (Block 102) dann, wenn die Genauigkeit noch nicht ausreichend ist (Raute 104 "NEIN") die maximale Messzeit schon erreicht ist. Wenn

EP 0 468 193 B1

dies nicht der Fall ist ("NEIN") wird das Flussdiagramm über die Blöcke 108, 110, 112 weiter durchlaufen. Wenn aber die maximale Messzeit schon verbraucht ist ("JA"), erfolgt gemäss Block 132 der Abbruch der Messung.

Die gleiche Funktion haben im linken Zweig des Flussdiagramms die Raute 130 zwischen dem "NEIN-Ausgang" der Raute 118 und Block 122 und der Block 134 am "JA-Ausgang" der Raute 130.

**Patentansprüche**

1. Verfahren zur Bestimmung der Nordrichtung mittels eines an einer Kreiselaufhängung pendelnd mit horizontaler Drallachse aufgehängten Kreisels,
   - bei welchem das Kreiselrichtmoment, das die Drallachse des Kreisels nach Nord auszurichten trachtet, durch ein Kompensationsmoment kompensiert und das Kompensationsmoment gemessen wird, und
   - bei welchem durch Messung in verschiedenen durch Schwenkwinkel der Kreiselaufhängung bestimmte Azimutpositionen aus der Meßgleichung

$$M_{gi} = K \sin (\alpha + \gamma_i) + M_o$$

   mit

   $M_{gi}$ = i-ter Meßwert des Kompensationsmomentes
   $K$ = Proportionalitätskonstante,
   $\gamma_i$ = i-ter Schwenkwinkel
   $M_o$ = Nullmoment der Kreiselaufhängung
   $\alpha$ = Nordbezugswinkel zwischen einer Gerätereferenz und Nord
   der Nordbezugswinkel bestimmt wird,
   **dadurch gekennzeichnet daß**, ausgehend von Schätzwerten für Proportionalitätskonstante K und Nullmoment $M_0$,
   (a) bei einer für einen bestimmten Schwenkwinkel ($\gamma_1$) auszuführenden Messung der Mittelwert ($M_{g1}$) aus eine Reihe von Kompensationsmomentmeßwerte ermittelt wird,
   (b) daraus und aus der vorgennanten Meßgleichung ein Schätzwert ($\hat{\alpha}$) für den Nordbezugswinkel ($\alpha$) errechnet wird,
   (c) aus dem Zusammenhang zwischen einem Fehler ($dM_{g1}$) der Messung des Kompensationsmoments ($M_{g1}$) bei dem so bestimmten Schätzwert und dem Fehler ($d\hat{\alpha}$) dieses Schätzwerts für den Nordbezugswinkel ein Fehler ($\varepsilon_2$) für die nächste bei einem anderen Schwenkwinkel auszuführenden Messung ermittelt wird, und
   (d) bei dieser nächsten Messung eine Reihe von Kompensationsmomentmessungen solange durchgeführt wird, bis die Differenz aufeinanderfolgender, aus der Meßreihe gebildeter Mittelwerte der Kompensationsmomentmeßwerte diesen Fehler ($\varepsilon_2$) unterschreitet.

2. Verfahren nach Anspruch 1, **dadurch gekennzeichnet, daß**
   - drei Positionen für eine Dreipositionmessung vorgegeben werden,
   - in einer ersten Position eine Grobmessung des Nordbezugswinkels erfolgt,
   - aufgrund dieser Grobmessung eine zweite Position so gewählt wird, daß sich aus den beiden Messungen ein Nordbezugswinkel mit optimaler Genauigkeit ergibt.

3. Verfahren nach Anspruch 2, **dadurch gekennzeichnet, daß**
   - anhand einer Fehleranalyse nach der zweiten Messung geprüft wird, ob die mit den Messungen in der ersten und der zweiten Position erzielte Genauigkeit des Nordbezugswinkels ausreicht, und
   - die Messung abgebrochen wird, wenn dies der Fall ist.

4. Verfahren nach Anspruch 2, **dadurch gekennzeichnet, daß**
   - eine maximale Meßzeit vorgegeben wird,
   - nach der zweiten Messung geprüft wird, ob die dafür zur Verfügung stehende maximale Meßzeit erreicht ist, und
   - die Messung abgebrochen wird, wenn dies der Fall ist.

**Claims**

1. Method of determining the direction of North by means of a gyro freely suspended from a gyroscope sus-

EP 0 468 193 B1

pension and having a horizontal spin axis
- wherein the gyro restoring moment which tends to orient the gyro spin axis toward the North, is compensated by a compensating moment and the compensating moment is measured,
- wherein the North reference angle is determined in different azimuthal positions which are defined by respective slewing angles of the gyroscope suspension, from the measuring equation

$$M_{gi} = K \sin(\alpha + \gamma_i) + M_0,$$

where

$M_{gi}$ = the $i^{th}$ measured value of the compensating moment,
$K$ = a proportionality constant,
$\gamma_i$ = the $i^{th}$ slewing angle,
$M_0$ = the zero moment of the gyroscope suspension,
$\alpha$ = the North reference angle between a device reference and North,

**characterized in that**, starting from estimate values for the proportionality constant K and the zero moment $M_0$,

(a) the mean value $(M_{g1})$ is determined from a series of measured values of the compensating moment for each measurement which is carried out at a definite slewing angle $(\gamma_1)$,

(b) an estimate value $(\alpha)$ is computed for the North reference angle $(\alpha)$ therefrom and from the aforenoted measuring equation,

(c) an error $(\varepsilon_2)$ is determined for the next following measurement to be carried out at a different slewing angle from the relation between an error $(dM_{g1})$ in the measurement of the compensating moment $(M_{g1})$ at the thus determined estimate value and the error $(d\alpha)$ in this estimate value of the North reference angle, and

(d) during the next following measurement, a series of measurements of the compensating moment is carried out until the difference between consecutive mean values of measured values of the compensating moment, which mean values are formed from the series of measurements, falls short of this error $(\varepsilon_2)$.

2. Method according to claim 1, **characterized in that**
   - three positions are predetermined for a three-position measurement,
   - in a first position, a coarse measurement is made of the North reference angle,
   - on the basis of this coarse measurement, a second position is selected such that the North reference angle results from the two measurements with optimum acuracy.

3. Method according to claim 2, **characterized in that**
   - after the second measurement and on the basis of an error analysis, it is checked whether the accuracy which is achieved by means of the first and second measurements, is sufficient, and
   - the measurement is stopped if this is not the case.

4. Method according to claim 2, **characterized in that**
   - a maximum measuring time period is predetermined,
   - after the second measurment, it is checked whether the maximum measuring time period available therefore has elapsed, and
   - the measurement is stopped if this is not the case.

**Revendications**

1. Méthode destinée à déterminer la direction du nord au moyen d'un gyroscope suspendu de manière pendulaire sur une suspension de gyroscope avec un axe de spin horizontal,
   - dans laquelle le moment directeur du gyroscope tendant à diriger l'axe de spin du gyroscope vers le nord est compensé par un moment compensateur et le moment compensateur est mesuré, et
   - dans laquelle, en mesurant dans des positions d'azimuth différentes déterminées par des angles de pivotement de la suspension de gyroscope, on détermine l'angle de rapport du nord à partir de l'équation de mesure

$$M_{gi} = K \sin (\alpha + \gamma_i) + M_0$$

avec

$M_{gi}$ = i-iem valeur de mesure du moment compensateur
$K$ = la constante de proportionnalité

9

$\gamma_i$      = i-iem angle de pivotement

$M_0$      = moment zéro de la suspension de gyroscope

$\alpha_i$      = angle de rapport du nord entre une référence d'appareil et le nord,

**caractérisée par le fait que**, en partant de valeurs estimatives pour la constante de proportionalité K et le moment zéro $M_0$

(a) lors d'une mesure à effectuer pour un angle de pivotement ($\gamma_1$) déterminé, la moyenne ($M_{g1}$) est déterminée à partir d'une série de valeurs de mesure de moment compensateur,

(b) à partir de celle-ci et de l'équation de mesure mentionnée ci-dessus, on calcule une valeur estimative ($\hat{\alpha}$) pour l'angle de rapport du nord ($\alpha$),

(c) à partir de la relation entre une erreur ($dM_{g1}$) de la mesure du moment compensateur ($M_{g1}$) dans la valeur estimative ainsi déterminée et l'erreur (da) de cette valeur estimative pour l'angle de rapport du nord, on détermine une erreur ($\varepsilon_2$) pour la mesure suivante à effectuer dans un autre angle de pivotement, et

(d) dans cette mesure suivante on effectue une série de mesures de moment compensateur jusqu'à ce que la différence des moyennes suivantes des valeurs de mesure de moment compensateur formées de la série de mesure soit inférieure à cette erreur ($\varepsilon_2$).

2. Méthode selon la revendication 1, **caractérisée par le fait que**
   - trois positions pour une mesure de trois positions sont prédéterminées,
   - dans une première position on effectue une mesure grossière de l'angle de rapport du nord,
   - sur la base de cette mesure grossière une seconde position est choisie de sorte qu'un angle de rapport du nord d'une exactitude optimale résulte des deux mesures.

3. Méthode selon la revendication 2, **caractérisée par le fait que**
   - sur la base d'une analyse d'erreur après la seconde mesure on vérifie si l'exactitude de l'angle de rapport du nord obtenue avec les mesures dans la première et la seconde position est suffisante, et
   - la mesure est interrompue si c'est le cas.

4. Méthode selon la revendication 2, **caractérisée par le fait que**
   - un temps de mesure maximum est prédéterminé,
   - après la seconde mesure, on vérifie si le temps de mesure maximum disponible à cette fin est atteint, et
   - la mesure est interrompue si c'est le cas.

Fig. 1

Digitales Filter

Berechnung der
Nordrichtung

Nord

$U_M$

START

Eindrehen in Stellung $\gamma$1 — 50

Messung von Mg1 — 52

Berechnung von $\hat{\alpha}$ — 54

Berechnung des zul. Fehlers $\varepsilon_2$ von Mg 2 — 56

Eindrehen in Stellung $\gamma$2 — 58

— 70

Messung von $U_M(\eta\,T)$ — 60

$\eta$ erhöhen um 1 — 68

Bildung von $\bar{U}_M(\eta\,T)$ — 62

$\bar{U}_M(\eta T) - \bar{U}_M((\eta-1)T) \leq \varepsilon_2$? — 64    NEIN

JA

Berechnung von Mg 2 — 66

Berechnung des zul. Fehlers $\varepsilon_3$ von Mg 3 — 72

Eindrehen in Stellung $\gamma$3 — 74

— 84

Messung von $U_M(\eta\,T)$ — 76

$\eta$ erhöhen um 1 — 82

Bildung von $\bar{U}_M(\eta\,T)$ — 78

$\bar{U}_M(\eta T) - \bar{U}_M((\eta-1)T) \leq \varepsilon_3$? — 80    NEIN

JA

Berechnung von Mg 3 — 86

Berechnung und Ausgabe von $\alpha$ — 88

Fig. 2

12

START

Festlegen von
$\gamma_1, \gamma_2, \gamma_3$ — 90

Eindrehen in
Position $\gamma_1$ — 92

Messung in
Position $\gamma_1$ — 94

Berechnen von $\alpha$ — 96

Fig. 3

Auswahl
$\gamma_2$? — 98

JA

NEIN ($\gamma_3$)

Eindrehen
in $\gamma_3$ — 114

Eindrehen
in $\gamma_2$ — 100

Messen
bei $\gamma_3$ — 116

Messen
bei $\gamma_2$ — 102

Genauigkeit
ausreichend
? — 118

Genauigkeit
ausreichend
? — 104

JA

JA

NEIN

NEIN

Maximale
Meßzeit erreicht
? — 130

Maximale
Meßzeit erreicht
? — 128

JA

JA

NEIN

NEIN

Eindrehen
in $\gamma_2$ — 122

Eindrehen
in $\gamma_3$ — 108

Messen
bei $\gamma_2$ — 124

Messen
bei $\gamma_3$ — 110

120

106

Berechnung
und Ausgabe
von $\alpha$

Berechnung
und Ausgabe
von $\alpha$ — 126

Berechnung
und Ausgabe
von $\alpha$

Berechnung
und Ausgabe
von $\alpha$

Abbruch — 134

Abbruch — 132

112

13